# DEMANDE DE BREVET EUROPEEN

(11) **EP 4 535 677 A1**
(43) Date de publication de la demande: **09.04.2025**
(21) Numéro de dépôt: 24202456.0
(22) Date de dépôt: 25.09.2024
(51) Int. Cl.: H04B 5/48

(54) **DISPOSITIF NFC**

(30) Priorité: 02.10.2023 FR 2310508
(71) Demandeur: STMicroelectronics International N.V., 1228 Plan-les-Ouates, Geneva (CH)
(72) Inventeur: TRAMONI, Alexandre, 83330 LE BEAUSSET (FR); FERROUL, Remy, 13530 TRETS (FR)
(74) Mandataire: Cabinet Beaumont

(57) **Abrégé**

La présente description concerne un appareil mobile comportant un routeur de communication en champ proche et une antenne (12), reliée au routeur par l'intermédiaire d'au moins un circuit d'adaptation d'impédance entre au moins deux valeurs d'impédance, dans lequel : une première valeur d'impédance est sélectionnée pour communiquer avec un dispositif de communication en champ proche d'un premier type (3) en présence d'un dispositif de communication en champ proche d'un deuxième type (2), une deuxième valeur d'impédance est sélectionnée pour communiquer avec un dispositif de communication en champ proche du premier type en l'absence d'un dispositif de communication en champ proche du deuxième type, la présence ou l'absence d'un dispositif de communication en champ proche du deuxième type étant déterminée à partir de trames d'interrogation émises par l'antenne.

## Description

### Domaine technique

La présente description concerne de façon générale le domaine des communications en champ proche et, plus particulièrement, l'association d'un appareil mobile avec plusieurs dispositifs de communication en champ proche dont certains sont susceptibles d'être associés à l'appareil de façon pérenne.

### Technique antérieure

Les systèmes de communication en champ proche (Near Field Communication - NFC) exploitent un champ électromagnétique radiofréquence généré par un dispositif (lecteur) pour communiquer avec un autre dispositif (carte).

Un même dispositif peut être tantôt lecteur, tantôt carte selon l'application.

Les communications en champ proche sont généralement normalisées ou répondent à des caractéristiques fixées par les acteurs du domaine. Par exemple, le « NFC Forum » fixe des caractéristiques auxquelles doivent satisfaire des dispositifs de communication pour échanger entre eux, en fonction par exemple de l'application ou de la nature des échanges (paiement, contrôle d'accès, authentification, échange de fichiers, etc.).

Pour communiquer entre un dispositif fonctionnant en mode lecteur et un dispositif fonctionnant en mode carte, le lecteur génère un champ électromagnétique qui se trouve chargé par une carte se trouvant à portée. La communication s'effectue selon divers protocoles prévoyant de modifier la phase et/ou l'amplitude d'une porteuse de modulation émise par le lecteur.

Dans les applications visées, le dispositif susceptible d'être associé de façon pérenne, c'est-à-dire pour une durée supérieure à celle d'une communication habituelle, peut être un accessoire attaché à l'appareil mobile, par exemple une coque communicante qui affiche l'heure, un porte-monnaie électronique (wallet en anglais), etc. L'accessoire utilise généralement le mode de communication en champ proche pour se faire reconnaître (s'apparier ou authentifier), en mode carte, par le téléphone mobile opérant en lecteur mais communique ensuite fonctionnellement avec ce dernier par une liaison d'une autre nature, par exemple Bluetooth, Wifi, etc. Le fait que l'accessoire soit en mode carte peut engendrer, lorsque le téléphone mobile doit établir une autre communication en mode carte avec un lecteur distant, que le lecteur distant voit deux « cartes » et refuse alors la communication. Une telle situation est susceptible de se produire, par exemple, avec un terminal de paiement qui perçoit deux dispositifs de communication de type carte dans son champ (le téléphone et sa coque).

On connaît des systèmes prévoyant un lecteur ou une antenne spécifique, distincts du lecteur ou de l'antenne pour des communications en mode lecteur/carte, pour communiquer avec l'accessoire. L'accessoire doit dans ces solutions être désactivé pendant les besoins de communication du mode lecteur/carte du téléphone avec un autre dispositif que l'accessoire. La détection de présence d'un accessoire s'effectue alors à l'aide d'un magnétomètre qui indique au microcontrôleur du téléphone que l'accessoire est présent, permettant à ce dernier de sélectionner le lecteur ou l'antenne à utiliser. Tant que l'accessoire n'a pas besoin d'être utilisé, il est placé dans un mode dit « muet » (mute) dans lequel il reste invisible à des trames d'interrogation d'un lecteur distant, en particulier d'un lecteur souhaitant communiquer lorsque le téléphone est en mode carte. L'accessoire quitte le mode « muet » en décodant une commande particulière émise par l'antenne qui lui est dédiée côté téléphone. Avec une telle solution, l'accessoire doit être dédié à un type de téléphone afin de pouvoir être placé en mode « muet ».

### Résumé de l'invention

Un mode de réalisation pallie tout ou partie des inconvénients des appareils à dispositif de communication en champ proche usuels. Plus particulièrement, un mode de réalisation vise à ce que la présence d'accessoires ou dispositifs NFC pérennes ne perturbe pas le fonctionnement d'un appareil mobile portant cet accessoire.

Un mode de réalisation prévoit un appareil mobile comportant un routeur de communication en champ proche et une antenne, reliée au routeur par l'intermédiaire d'au moins un circuit d'adaptation d'impédance entre au moins deux valeurs d'impédance, dans lequel : une première valeur d'impédance est sélectionnée pour communiquer avec un dispositif de communication en champ proche d'un premier type en présence d'un dispositif de communication en champ proche d'un deuxième type, une deuxième valeur d'impédance est sélectionnée pour communiquer avec un dispositif de communication en champ proche du premier type en l'absence d'un dispositif de communication en champ proche du deuxième type, la présence ou l'absence d'un dispositif de communication en champ proche du deuxième type étant déterminée à partir de trames d'interrogation émises par l'antenne.

Un autre mode de réalisation prévoit un procédé de communication en champ proche d'un appareil mobile comportant un routeur de communication en champ proche et une antenne, reliée au routeur par l'intermédiaire d'au moins un circuit d'adaptation d'impédance entre au moins deux valeurs d'impédance, dans lequel : une première valeur d'impédance est sélectionnée pour communiquer avec un dispositif de communication en champ proche d'un premier type en présence d'un dispositif de communication en champ proche d'un deuxième type, une deuxième valeur d'impédance est sélectionnée pour communiquer avec un dispositif de communication en champ proche du premier type en l'absence d'un dispositif de communication en champ proche du deuxième type, la présence ou l'absence d'un dispositif de communication en champ proche du deuxième type étant déterminée à partir de trames d'interrogation émises par l'antenne.

Selon un mode de réalisation, le deuxième type de dispositif correspond à un accessoire de l'appareil.

Selon un mode de réalisation, la communication avec le premier type de dispositif s'effectue en mode lecteur ou carte.

Selon un mode de réalisation, une identification d'un dispositif du deuxième type est effectuée avec l'appareil en mode lecteur.

Selon un mode de réalisation, l'identification d'un dispositif du deuxième type est effectuée par un microcontrôleur de l'appareil, distinct du routeur, le microcontrôleur mémorisant un identifiant unique du dispositif du deuxième type.

Selon un mode de réalisation, si aucun dispositif du premier ou deuxième type n'est détecté pendant une trame d'interrogation, le microcontrôleur efface tout identifiant unique d'un dispositif du deuxième type présent en mémoire.

Selon un mode de réalisation, suite à une identification d'un dispositif NFC du deuxième type, des seuils d'un détecteur en mode veille sont recalibrés.

Selon un mode de réalisation, si un dispositif NFC du deuxième type précédemment identifié n'est plus détecté, des seuils d'un détecteur en mode veille sont recalibrés.

Selon un mode de réalisation, l'antenne comporte deux boucles électriquement en série, respectivement destinées à des dispositifs du premier et du deuxième type.

Selon un mode de réalisation, la boucle destinée aux dispositifs du deuxième type entoure ou est entourée d'un aimant d'alignement des antennes respectives de l'appareil et du dispositif du deuxième type.

Selon un mode de réalisation, les communications NFC entre l'appareil et dispositifs du deuxième type sont de type V.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un mode de réalisation d'un système de communication en champ proche selon un premier aspect ;
la figure 2 représente, de façon très schématique, partielle et sous forme de blocs, un mode de réalisation d'un dispositif de communication en champ proche selon le premier aspect ;
la figure 3 illustre, de façon très schématique et sous forme de blocs, un mode de mise en oeuvre du dispositif de communication en champ proche de la figure 2 ;
la figure 3A illustre, de façon plus détaillée, un ensemble d'étapes du mode de mise en oeuvre de la figure 3 ;
la figure 4 représente, de façon très schématique et sous forme de blocs, un mode de réalisation d'un système de communication en champ proche selon un deuxième aspect ;
la figure 5 représente, de façon très schématique, partielle et sous forme de blocs, un mode de réalisation d'un dispositif de communication en champ proche selon le deuxième aspect ;
la figure 6 illustre, de façon très schématique et sous forme de blocs, un mode de mise en oeuvre du dispositif de communication en champ proche de la figure 5 ; et
la figure 6A illustre, de façon plus détaillée, un ensemble d'étapes du mode de mise en oeuvre de la figure 6.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les protocoles de communication entre les différents dispositifs NFC, n'ont pas été détaillés, les modes de réalisation décrits étant compatibles avec les protocoles de communication usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

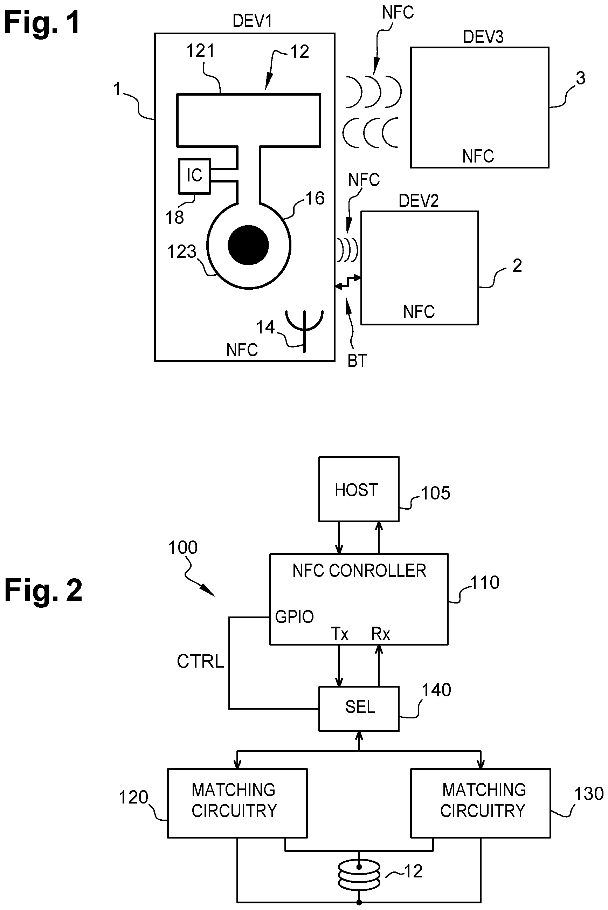

La figure 1 représente, de façon très schématique et sous forme de blocs, un mode de réalisation d'un système de communication en champ proche selon un premier aspect.

Dans la suite de la description, on suppose un système constitué d'un téléphone mobile 1 (DEV1) susceptible d'être associé à un accessoire 2 (DEV2) de type coque de téléphone communicante, mais tout ce qui va être décrit s'applique plus généralement à tout système dans lequel un appareil mobile peut être associé de façon pérenne avec un dispositif de communication en champ proche. Il pourra s'agir, par exemple, d'un porte-monnaie électronique ou d'un élément qui pourrait être rechargé par un transfert d'énergie sans fil, par exemple selon le standard Qi. Cet élément pourrait, avant de commencer le chargement, demander une authentification à l'aide de la technologie NFC. Cet élément est par exemple un stylet ou un bracelet connecté (« fitness band » en anglais). Un autre exemple est une batterie capable de recharger le téléphone : avant de recharger le téléphone par transfert d'énergie sans fil, cette batterie est par exemple authentifiée par NFC.

Par association pérenne, on entend un dispositif susceptible de rester lié au téléphone même hors de périodes de communication NFC, voire hors de périodes de communication par le réseau cellulaire et d'échanger néanmoins avec le téléphone via un autre canal (par exemple, Bluetooth) .

Une coque communicante pour téléphone comporte, par exemple, un afficheur adapté à communiquer avec les circuits du téléphone pour dupliquer certaines informations, comme par exemple, l'heure, un écran de veille, etc. Les échanges d'information s'effectuent généralement par liaison Bluetooth (BT) ou Wifi mais une communication en champ proche (NFC) est utilisée pour des besoins de détection de présence et/ou d'authentification de la coque par le téléphone.

Dans le cadre des échanges entre le téléphone 1 et son accessoire 2, le téléphone fonctionne en mode lecteur et l'accessoire en mode carte.

Le téléphone 1 est par ailleurs susceptible de communiquer avec un autre dispositif 3 (DEV3) à portée duquel il se trouve. En particulier, le téléphone peut avoir besoin de fonctionner en mode carte pour échanger avec un lecteur distant, par exemple un terminal de paiement ou une borne de contrôle d'accès.

On prendra par la suite l'exemple d'un terminal de paiement, mais tout ce qui va être décrit s'applique plus généralement à tout dispositif distant opérant en lecteur et avec lequel le dispositif 1 portant un accessoire 2 est susceptible de communiquer en NFC. Pour simplifier, on fera référence à des dispositifs NFC pour désigner des dispositifs électroniques intégrant des circuits de communication en champ proche.

Selon le premier aspect, le téléphone mobile 1 comporte une seule antenne NFC 12 qui comporte deux boucles 121 et 123 électriquement en série. Une première boucle 121 est dédiée aux communications NFC, en mode carte ou en mode lecteur, avec un dispositif distant 3 autre qu'un accessoire. Une deuxième boucle 123 est dédiée aux communications NFC avec l'accessoire 2. Le téléphone 1 est équipé d'autres antennes de communication usuelles (cellulaire, WiFi, Bluetooth) et, notamment, d'une antenne de communication 14, hors NFC, par exemple de type Bluetooth, utilisée, entre autres, pour l'accessoire.

Deux bornes de l'antenne sont reliées à un contrôleur NFC (et le cas échéant à d'autres circuits électroniques) faisant partie du téléphone 1 symbolisé en figure 1 par un bloc 18 (IC).

De préférence, un aimant 16 entoure ou est entouré par la deuxième boucle 123. Cet aimant sert à aligner cette deuxième boucle 123 de l'antenne 12 avec une antenne (non représentée) de l'accessoire 2.

La figure 2 représente, de façon très schématique, partielle et sous forme de blocs, un mode de réalisation d'un dispositif 100 de communication en champ proche selon le premier aspect.

Plus particulièrement, la figure 2 représente un dispositif 100 du téléphone mobile 1 selon un mode de réalisation, relié à l'antenne 12. L'antenne 12 est généralement associée à un ou plusieurs éléments capacitifs non représentés (internes et/ou externes au dispositif 100) pour former un circuit oscillant commandé par le dispositif 100.

Le dispositif 100 comporte divers circuits électroniques numériques et analogiques dépendant de son application. Pour un téléphone, son dispositif NFC est basé sur un routeur (ou contrôleur) NFC commandé par un circuit ou microcontrôleur hôte 105 (HOST). Le contrôleur NFC sert d'interface entre les circuits numériques du téléphone et le circuit oscillant d'émission-réception radiofréquence. Dans l'exemple considéré, l'antenne 12 est adaptée à communiquer avec des dispositifs 2 et 3 différents selon la boucle utilisée. Pour ce faire, le dispositif 100 comporte, entre le contrôleur NFC 110 et l'antenne, deux circuits 120 et 130 d'adaptation d'impédance et un sélecteur 140 (SEL) pour aiguiller les signaux à transmettre Tx ou reçus Rx vers l'un ou l'autre des circuits 120 et 130 en fonction du mode de fonctionnement choisi. Plus particulièrement, un premier circuit 120 (MATCHING CIRCUITRY) d'adaptation d'impédance est dédié au fonctionnement en mode lecteur avec l'accessoire 2, et un deuxième circuit 130 (MATCHING CIRCUITRY) d'adaptation d'impédance est dédié au fonctionnement en mode lecteur ou carte avec le dispositif 3. Ces circuits 120 et 130 permettent d'ajuster l'accord du circuit oscillant en fonction de la présence ou de l'absence d'un accessoire.

Dans l'exemple de la figure 2 :
une sortie (Tx) du contrôleur NFC 110 est reliée, de préférence connectée, à une première borne du sélecteur 140 ;
   une entrée (Rx) du contrôleur NFC 110 est reliée, de préférence connectée, à une deuxième borne du sélecteur 140 ;
   une borne d'entrée/sortie du sélecteur 140 est reliée, de préférence connectée, aux circuits d'adaptation 120 et 130 ;
une borne de commande du sélecteur est reliée au contrôleur NFC ;
l'antenne 12 est reliée aux deux circuits 120 et 130.

Pour simplifier, on fait référence, au niveau du contrôleur NFC, à une sortie Tx des signaux à transmettre et une entrée Rx des signaux reçus mais, en pratique, on utilise le plus souvent des signaux différentiels, un convertisseur à changement de mode (balun) non représenté étant présent entre l'antenne et le sélecteur ou les circuits d'adaptation d'impédance.

En variante, le sélecteur 140 est intégré à un unique circuit d'adaptation d'impédance pourvu de composants adaptés aux deux configurations d'adaptation d'impédance.

Le choix des valeurs d'impédance apportées par les circuits d'adaptation est fonction des caractéristiques des boucles de l'antenne de sorte que le circuit oscillant reste accordé que l'accessoire soit présent ou non. Ces valeurs sont déterminées, par exemple, au moment de l'intégration du circuit dans le dispositif 100 en fonction de l'antenne et de l'intégration et sont, de préférence, fixes.

Selon ce mode de réalisation, un port (GPIO) d'entrée-sortie à usage général (General Purpose Input/Output - GPIO) du contrôleur NFC 110 émet vers le sélecteur 140 un signal numérique (CTRL) de commande. Le signal CTRL est, de préférence, un signal binaire dont, par exemple :
un état haut (ou niveau haut) commande l'activation, via le sélecteur 140, du circuit d'adaptation 120 pour une communication NFC, en mode lecteur ou carte avec un dispositif 3, en présence de l'accessoire 2 ; et
un état bas (ou niveau bas) commande l'activation, via le sélecteur 140, de l'autre circuit d'adaptation 130 pour une communication NFC, en mode lecteur ou carte avec un dispositif 3 ou en mode lecteur avec l'accessoire, en l'absence de l'accessoire 2.

Selon les modes de réalisation décrits, on prévoit d'exploiter des trames d'interrogation émises par le dispositif 100 pour détecter la présence ou l'absence d'un accessoire en face de l'antenne 12. En effet, la présence d'un accessoire charge l'antenne 12 et requiert, pour une communication avec la boucle 121 à destination d'un autre dispositif NFC, de modifier l'adaptation d'impédance afin de conserver l'accord.

En pratique, un lecteur, lorsqu'il est « à vide », c'est-à-dire sans carte dans son champ, est placé dans un mode basse consommation, et génère alors périodiquement des trames d'interrogation afin de détecter une carte entrant dans le champ du lecteur. Une fois une carte détectée dans le champ, des circuits électroniques du dispositif lecteur sont « réveillés » (sortent du mode de veille) et une communication ou transaction avec la carte peut être initiée. Les trames d'interrogation sont généralement désignées par l'acronyme LPCD (Low Power Card Détection - détection de carte électronique en mode basse puissance) ou LPTD (Low Power Tag Detector - détection d'étiquette électronique en mode basse puissance).

Lorsqu'un accessoire « pérenne » est détecté, on prévoit de mémoriser son identifiant afin de prendre en compte sa présence y compris lorsque le téléphone a besoin d'échanger avec un autre dispositif. Plus particulièrement, l'adaptation d'impédance reste dans l'état fixé par le circuit 120 tant que l'accessoire reste présent (associé au téléphone).

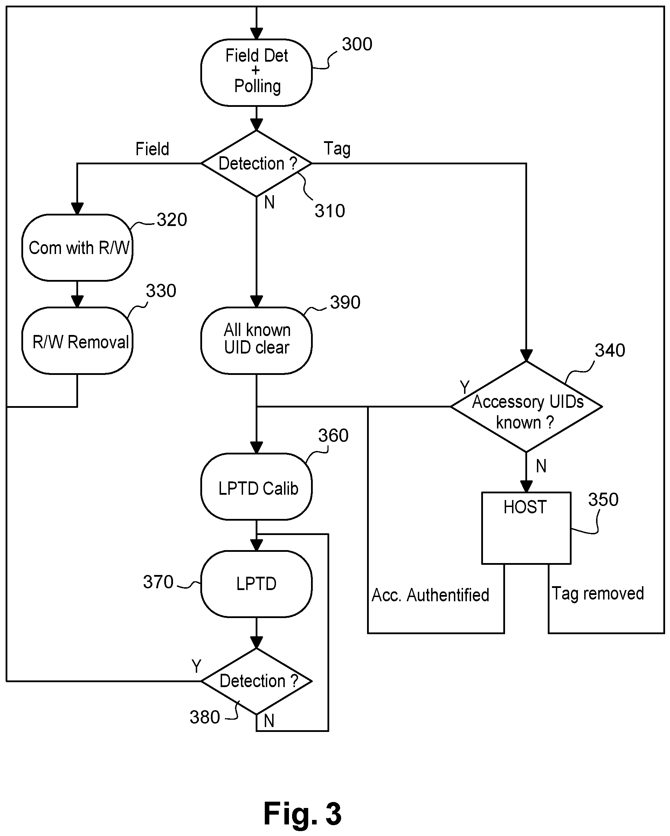

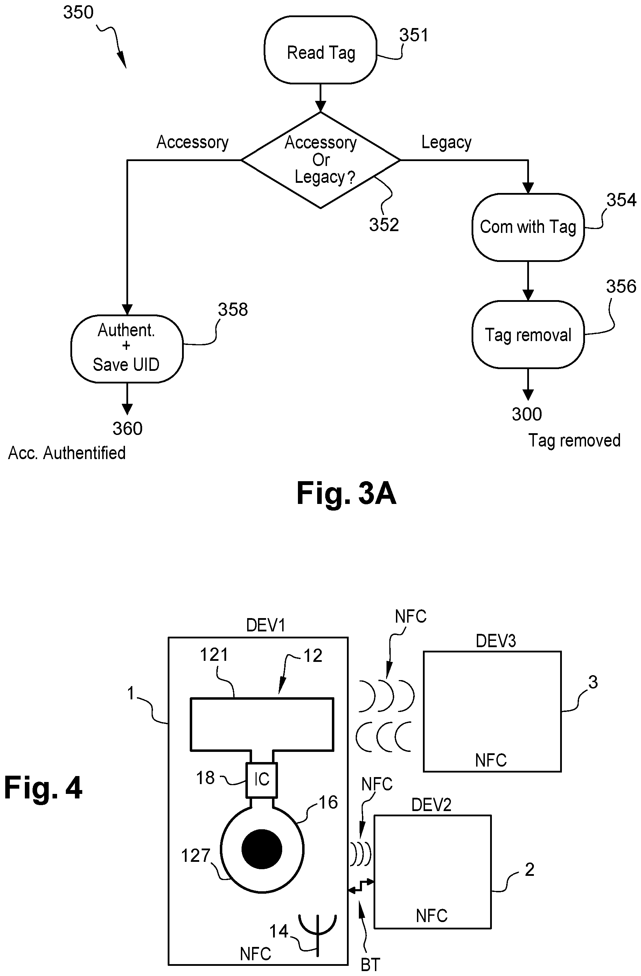

La figure 3 illustre, de façon très schématique et sous forme de blocs, un mode de mise en oeuvre du dispositif de communication en champ proche de la figure 2.

La figure 3A illustre, de façon plus détaillée, un ensemble d'étapes du mode de mise en oeuvre de la figure 3.

Lorsqu'il est en mode basse consommation, le dispositif NFC 1 active périodiquement (blocs 300, « Field Det + Polling » et 310, « Détection ? ») un détecteur de champ pour détecter la présence d'un dispositif en mode lecteur et émet un signal radiofréquence pour détecter la présence d'un dispositif en mode carte. Lors d'une détection, le contrôleur 110 émet une requête d'identification afin d'obtenir l'identifiant du dispositif (généralement un identifiant unique - UID ou Unique Identifier).

Dans le cas d'une détection d'un champ électromagnétique (sortie « Field » du bloc 310), cela signifie que le téléphone 1 capte un champ électromagnétique et est vraisemblablement dans le champ d'un lecteur. Le téléphone mobile 1 se comporte alors en mode carte. Les circuits du téléphone sont réveillés de façon à pouvoir entrer en communication avec un dispositif NFC 3 lecteur (bloc 320 « Com with R/W »). Un échange de données s'effectue alors en NFC entre le téléphone et le lecteur. Une fois l'échange terminé (bloc 330 « R/W removal »), le dispositif repasse en mode veille ou basse consommation et on revient à l'étape 300 de détection de champ et d'émission de trames d'interrogation.

En l'absence de champ détecté à l'étape 300, le contrôleur 110 émet une trame d'interrogation de façon à détecter si une étiquette électronique (dispositif NFC en mode carte) est ou non présente. Cette détection, en elle-même usuelle, exploite des variations d'amplitude et/ou de phase au niveau du signal aux bornes du circuit oscillant, ces paramètres étant modifiés en présence d'une carte.

En présence d'une carte (sortie « Tag » du bloc 310), l'identifiant obtenu à l'étape 300 est comparé par le contrôleur 110 à un potentiel identifiant unique préalablement mis en mémoire (bloc 340 « Accessory UIDs known ? »).

Si l'identifiant unique est présent en mémoire (sortie Y du bloc 340), cela signifie que l'accessoire a déjà été pris en compte (par exemple que le téléphone est resté dans sa coque depuis la précédente comparaison). On considère alors que l'adaptation d'impédance est correcte et on repasse en mode veille, le cas échéant via une phase de calibration qui sera décrite ultérieurement, jusqu'à la trame de détection et d'interrogation (étape 300) suivante.

Si l'identifiant unique n'est pas présent en mémoire (sortie N du bloc 340), les circuits du téléphone et notamment son processeur principal 105 (HOST) sont réveillés et le téléphone communique avec le dispositif NFC pour déterminer s'il s'agit d'un accessoire 2 ou d'un dispositif NFC 3 (351, « Read Tag » et 352, « Accessory or Legacy ? », figure 3A).

Dans le cas où l'on est en présence d'un dispositif NFC 3 (sortie « Legacy » du bloc 352), le téléphone 1 se comporte en mode lecteur et le dispositif NFC 3 en mode carte. Les circuits du téléphone sont réveillés de façon à pouvoir entrer en communication avec le dispositif NFC 3 (bloc 354 « Com with Tag »). Un échange de données s'effectue alors en NFC entre la carte et le lecteur (le téléphone). Une fois l'échange terminé (bloc 356 « Tag removal »), l'étiquette est en pratique écartée du téléphone (« Tag removed ») et le dispositif repasse en mode veille ou basse consommation et on revient à l'étape 300 de détection de champ et d'émission de trames d'interrogation.

Dans le cas où l'étape 352 détecte que le dispositif présent dans le champ émis par le téléphone est un accessoire 2 (sortie « Accessory » du bloc 352), c'est-à-dire un dispositif amené à rester associé au téléphone mobile de façon pérenne, l'accessoire est identifié et son identifiant est mémorisé (bloc 358, « Authent. + Save UID ») par le microcontrôleur 105 du téléphone (HOST). La mémorisation de l'identifiant sera utilisée ultérieurement (lors de trames d'interrogations ultérieures) lors d'une étape 340 pour établir si un dispositif, en mode carte, présent dans le champ du dispositif 1, est un nouveau dispositif entré dans le champ depuis la boucle de détection précédente ou correspond à un accessoire resté dans le champ.

Suite à la mémorisation d'un nouvel accessoire (sortie « Acc. Authentified » du bloc 105), le dispositif met en oeuvre un processus usuel de calibration afin d'ajuster les niveaux d'amplitude au nouvel environnement du téléphone. Par exemple, une étape (bloc 360, « LPTD Calib ») calibre les seuils de détection en mode basse consommation LPTD pour prendre en compte la charge que représente l'accessoire. Les boucles d'interrogation en mode basse consommation compensent alors la présence de l'accessoire pour détecter correctement tout autre dispositif NFC.

Le téléphone mobile 1 retourne alors en mode veille en émettant des boucles LPTD régulières (bloc 370, « LPTD ») tant qu'aucune variation de champ n'est détectée (sortie N du bloc 380, « Détection ? »).

Cette calibration 360 est également effectuée si l'on détecte, au bloc 310, ni champ, ni étiquette électronique (sortie N du bloc 310) . Cela peut signifier qu'un accessoire précédemment présent et enregistré n'est plus en relation avec l'appareil 1. Son identifiant, qui avait été enregistré lors de sa détection, est alors effacé de la mémoire de l'appareil (bloc 390, « All known UID clear ») puis une calibration est effectuée. Le cas échéant, une information est envoyée au circuit hôte 105 (HOST) pour une potentielle notification à l'utilisateur de l'appareil que l'accessoire n'est plus détecté.

A l'issue de la calibration 360, le téléphone mobile retourne en mode veille (bloc 370) et, lorsqu'une variation de charge est détectée (sortie Y du bloc 380), le téléphone retourne aux étapes 300 et 310 pour déterminer la nature du dispositif NFC ayant causé la perturbation.

Lorsque le téléphone doit communiquer avec un dispositif 3, il est préférable que l'accessoire 2 ne pollue pas la détection de ce dispositif 3. Pour cela, l'accessoire 2 ne doit pas répondre au téléphone si ce dernier est en mode lecteur, ni au dispositif 3 opérant en mode lecteur de façon à laisser la communication au téléphone en mode carte.

Selon un mode de réalisation, on prévoit alors de placer l'accessoire 2 en mode muet "mute" dans lequel il ne répond pas à des trames d'interrogation NFC. L'accessoire 2 est commuté en mode muet sous commande du téléphone 1 qui émet une commande particulière en NFC interprétable uniquement par l'accessoire 2. Lorsqu'il souhaite communiquer avec l'accessoire, le téléphone 1 envoie à l'accessoire 2 une commande de désactivation du mode muet. Une telle solution requiert que le téléphone et l'accessoire soient compatibles à un tel fonctionnement. En particulier, le téléphone et l'accessoire doivent disposer, dans leur jeu de commandes, des commandes requises pour la commutation vers et hors du mode muet de l'accessoire.

Selon un autre mode de réalisation, on prévoit que les communications entre le téléphone 1 et l'accessoire 2 s'effectuent dans un type particulier, à savoir le type V. Par exemple, le type V est décrit plus en détail dans le standard ISO/IEC15693. On tire alors profit du fait que les communications entre un téléphone 1 et un autre dispositif 3 en mode lecteur exploitent généralement les types A ou B, notamment pour des applications de paiement et de contrôle d'accès. Ainsi, l'accessoire ne répondant pas aux requêtes de type A ou de type B mais uniquement à des requêtes de type V, ces applications ne sont pas impactées par sa présence. Les types A, B et V sont définis par le NFC Forum.

La figure 4 représente, de façon très schématique et sous forme de blocs, un mode de réalisation d'un système de communication en champ proche selon un deuxième aspect.

Pour simplifier, seules les différences par rapport au mode de réalisation de la figure 1 seront détaillées ci-après, le mode de réalisation de la figure 4 reprenant pour le reste les éléments du mode de réalisation de la figure 1.

Selon le deuxième aspect, le téléphone mobile 1 comporte deux antennes NFC 125 et 127 distinctes. Une première antenne 125 est dédiée aux communications NFC, en mode carte ou en mode lecteur, avec un dispositif distant 3 autre qu'un accessoire 2. Une deuxième antenne 127 est dédiée aux communications NFC, en mode lecteur, avec l'accessoire 2. Dans ce mode de réalisation, un aimant 16 entoure ou est entouré par la deuxième antenne 127.

Par rapport au mode de réalisation de la figure 1, la différence est donc l'utilisation de deux antennes plutôt que de deux boucles d'une même antenne.

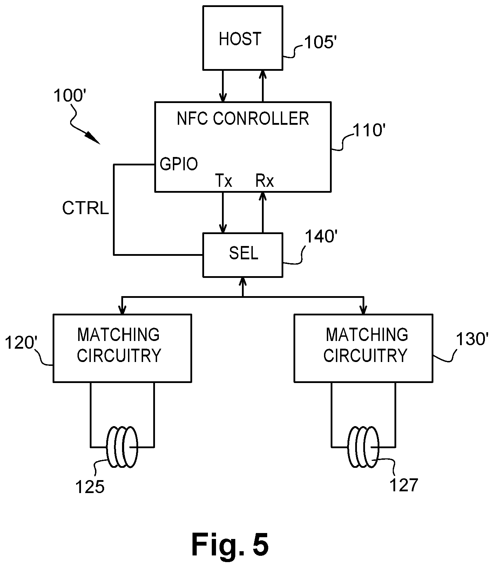

La figure 5 représente, de façon très schématique, partielle et sous forme de blocs, un mode de réalisation d'un dispositif de communication en champ proche selon le deuxième aspect.

Pour simplifier, seules les différences par rapport au mode de réalisation de la figure 2 seront détaillées ci-après, le mode de réalisation de la figure 5 reprenant pour le reste les éléments du mode de réalisation de la figure 2.

Le dispositif NFC 1 comporte deux antennes 125 et 127 qui sont reliées, de préférence connectées, à deux circuits d'adaptation d'impédance (MATCHING CIRCUIT) 120' et 130' respectivement.

Dans ce mode de réalisation, le sélecteur 140' (SEL) permet d'aiguiller, vers l'une ou l'autre des antennes 125 et 127, des signaux NFC à émettre par le dispositif NFC 1 comportant le circuit 100' en fonction du dispositif distant 2 ou 3 avec lequel le téléphone mobile 1 souhaite communiquer. Le sélecteur 140' est un sélecteur d'antenne, chaque antenne étant associée à son circuit d'adaptation d'impédance. Le sélecteur est relié, de la même façon qu'en figure 2, au contrôleur NFC 110' (NFC CONTROLLER), lui-même relié au circuit hôte 105' (HOST).

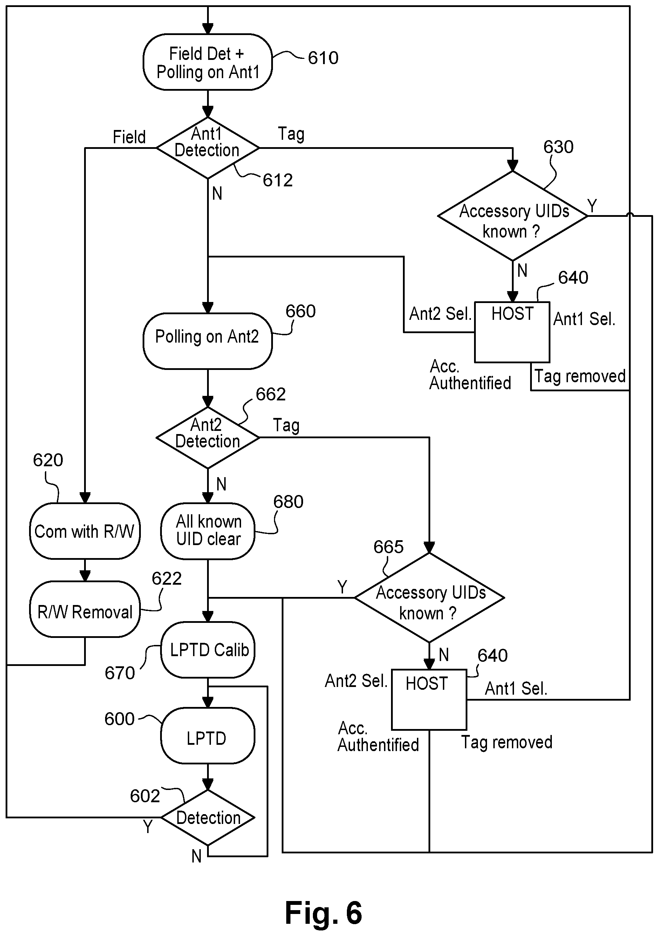

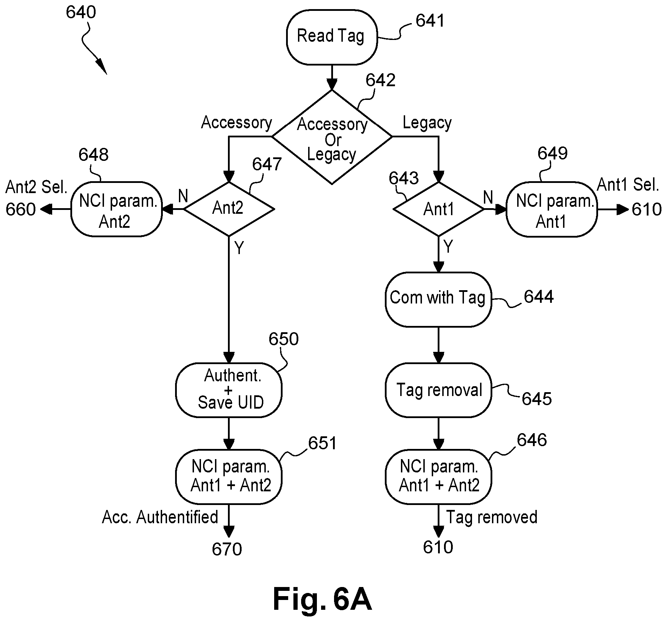

La figure 6 illustre, de façon très schématique et sous forme de blocs, un mode de mise en oeuvre du dispositif de communication en champ proche de la figure 5.

La figure 6A illustre, de façon plus détaillée, un ensemble d'étapes du mode de mise en oeuvre de la figure 6.

Dans ces figures, « Ant1 » se réfère à l'antenne 125 dédiée à un dispositif NFC 3 et « Ant2 » se réfère à l'antenne 127 dédiée à un accessoire 2.

Lorsqu'il est en mode basse consommation ou veille, le dispositif NFC 1 active périodiquement (bloc 600, « LPTD ») des boucles d'interrogation sur les deux antennes 125 et 127 pour détecter une variation de charge (bloc 602, « Détection ? ») témoignant de l'arrivée ou du départ d'un dispositif NFC 2 ou 3.

Les boucles d'interrogation 600 se répètent tant qu'aucune variation de charge n'est détectée (sortie N du bloc 602).

Dans le cas d'une détection de variation (sortie Y du bloc 602), un détecteur de champ pour détecter la présence d'un dispositif en mode lecteur est activé et un signal radiofréquence pour détecter la présence d'un dispositif en mode carte est émis par l'antenne 125 (blocs 610, « Field Det + Polling on Ant1 » et 612, « Ant1 Détection ? »). Lors d'une détection, le contrôleur 110' émet une requête d'identification afin d'obtenir l'identifiant du dispositif (généralement un identifiant unique - UID ou Unique Identifier).

Dans le cas d'une détection d'un champ électromagnétique (sortie « Field » du bloc 612), cela signifie que le téléphone 1 capte un champ électromagnétique et est vraisemblablement dans le champ d'un lecteur. Le téléphone mobile 1 se comporte alors en mode carte. Les circuits du téléphone sont réveillés de façon à pouvoir entrer en communication avec un dispositif NFC 3 lecteur (bloc 620 « Com with R/W »). Un échange de données s'effectue alors en NFC entre le téléphone et le lecteur à l'aide de l'antenne 125. Une fois l'échange terminé (bloc 622 « R/W removal »), on revient à l'étape 610 de détection de champ et d'émission de trames d'interrogation sur l'antenne 125.

En l'absence de champ détecté à l'étape 610, le contrôleur 110' émet une trame d'interrogation sur l'antenne 125 de façon à détecter si une étiquette électronique (dispositif NFC en mode carte) est ou non présente.

En présence d'une carte détectée par l'antenne 125 (sortie « Tag » du bloc 612), le contrôleur 110' compare son identifiant (généralement un identifiant unique - UID ou Unique Identifier) obtenu à l'étape 610 à un potentiel identifiant unique préalablement mis en mémoire (bloc 630

### « Accessory UIDs known ? »).

Si l'identifiant unique est présent en mémoire (sortie Y du bloc 630), cela signifie qu'il s'agit d'un accessoire 2 et qu'il a déjà été pris en compte par l'antenne 127 (par exemple que le téléphone est resté dans sa coque depuis la précédente comparaison). On considère alors que l'adaptation d'impédance est correcte et on repasse en mode veille, le cas échéant via une phase de calibration qui sera décrite ultérieurement, jusqu'à la trame de détection et d'interrogation (étape 610) suivante.

Si l'identifiant unique n'est pas présent en mémoire (sortie N du bloc 630), les circuits du téléphone et notamment son processeur principal 105' (HOST) sont réveillés et le téléphone communique avec le dispositif NFC pour déterminer s'il s'agit d'un accessoire 2 ou d'un dispositif NFC 3 (641, « Read Tag » et 642, « Accessory or Legacy ? », figure 6A).

Dans le cas où l'une des antennes détecte que le dispositif présent dans le champ émis par le téléphone est un dispositif NFC 3 (sortie « Legacy » du bloc 642), le dispositif doit utiliser l'antenne 125. On vérifie alors (bloc 643, « Ant1 ? ») si l'on est avec l'antenne 125. Dans l'affirmative (sortie Y du bloc 643), le téléphone 1 se comporte en mode lecteur et le dispositif NFC 3 se comporte en mode carte. Les circuits du téléphone sont réveillés de façon à pouvoir entrer en communication avec le dispositif NFC 3 (bloc 644 « Com with Tag »). Un échange de données s'effectue alors en NFC entre la carte et le lecteur (téléphone). Une fois l'échange terminé (bloc 645 « Tag removal »), l'étiquette est en pratique écartée du téléphone (« Tag removed ») et le circuit hôte 105' communique au contrôleur NFC 110' de sélectionner les deux antennes (bloc 646 « NCI param. Ant1 + Ant2 ») pour les trames d'interrogation ultérieures. On reprend le procédé par exemple à l'étape 610 pour sonder la présence d'un autre dispositif NFC et tout ajout ou retrait d'un accessoire 2 qui se serait produit depuis la dernière trame d'interrogation.

Si, à l'étape 642, l'une des antennes 125, 127 détecte que le dispositif présent dans le champ émis par le téléphone est un accessoire 2 (sortie « Accessory » du bloc 642), c'est-à-dire un dispositif amené à rester associé au téléphone mobile de façon pérenne, le dispositif utilise l'antenne 127. On vérifie alors (bloc 647, « Ant2 ? ») si l'on est avec l'antenne 127. Dans la négative (sortie N du bloc 647), le circuit hôte 105' communique au contrôleur NFC 110' de sélectionner l'antenne 127 (bloc 648 « NCI param. Ant2 »).

La sélection de l'antenne 127 (« Ant2 Sel. ») conduit par exemple à ce que le téléphone mobile 1 émette , des trames d'interrogation par l'antenne 127 de façon à détecter si une étiquette électronique (dispositif NFC en mode carte) est ou non présente (bloc 660 « Polling on Ant2).

En présence d'un dispositif détecté par l'antenne 127 (sortie « Tag » du bloc 662 « Ant2 Détection ? »), le contrôleur 110' compare son identifiant à un potentiel identifiant unique préalablement stocké en mémoire du circuit hôte 105' (bloc 665 « Accessory UIDs known ? »).

Si l'identifiant unique est présent en mémoire (sortie Y du bloc 665), cela signifie qu'il s'agit d'un accessoire 2 déjà pris en compte (par exemple que le téléphone est resté dans sa coque depuis la précédente comparaison). On considère alors que l'adaptation d'impédance est correcte et on repasse en mode veille (bloc 600 et 602), le cas échéant via une phase de calibration.

Si l'identifiant unique n'est pas présent en mémoire (sortie N du bloc 665), les circuits du téléphone et notamment son processeur principal 105' (HOST) sont réveillés et le téléphone communique avec le dispositif NFC, comme dans le cas décrit précédemment avec l'antenne 127, pour déterminer si l'on est en présence d'un accessoire 2 ou d'un dispositif NFC 3 (blocs 641 et 642, figure 6A).

Dans le cas où l'étiquette dans le champ de l'antenne 127 est un dispositif NFC 3 (sortie « Legacy » du bloc 642), le circuit hôte 105' communique au contrôleur NFC 110' de sélectionner l'antenne 125, après avoir vérifié (bloc 643, « Ant1 ? ») que l'antenne 127 est activée (sortie N du bloc 643). La sélection de l'antenne 125 (bloc 649 « NCI param. Ant1 ») conduit à ce que le téléphone mobile ne poursuive pas la communication avec le dispositif NFC 3 et retourne à l'étape 610 pour effectuer une détection avec l'antenne 125 (« Ant1 Sel ») .

Dans le cas où l'étiquette dans le champ de l'antenne 127 est un accessoire 2 (sortie « Accessory » du bloc 642), après avoir vérifié (bloc 647, « Ant2 ? ») que l'on est bien en train d'utiliser l'antenne 127 (sortie Y du bloc 647), l'accessoire est identifié et son identifiant est mémorisé (bloc 650, « Authent. + Save UID ») par le microcontrôleur hôte 105' du téléphone. La mémorisation de l'identifiant sera utilisée ultérieurement (lors de trames d'interrogations ultérieures) aux étapes 630 et 665 pour établir si un dispositif en mode carte présent dans le champ du dispositif 1 est un nouveau dispositif entré dans le champ depuis la boucle de détection précédente ou correspond à un accessoire resté dans le champ.

Une fois la mémorisation effectuée, le circuit hôte 105' communique au contrôleur NFC 110' de sélectionner les deux antennes (bloc 651 « NCI param. Ant1 + Ant2 ») pour les trames d'interrogations ultérieures.

A la suite de cette mémorisation d'un nouvel accessoire (« Acc. Authentified »), le dispositif 100' met en oeuvre un processus usuel de calibration (étapes 670 correspondant à l'étape 360) afin d'ajuster les niveaux d'amplitude au nouvel environnement du téléphone.

Le téléphone mobile 1 retourne alors en mode veille en émettant des boucles LPTD (bloc 600) régulières tant qu'aucune variation de champ n'est détectée.

Si, lors de l'étape 612 de détection par l'antenne 125, aucun champ ni étiquette numérique n'est détecté (sortie N du bloc 612), des trames d'interrogation sont émises uniquement par l'antenne 127 (bloc 660). Si aucun accessoire n'est détecté à partir du champ émis par l'antenne 127 (sortie N du bloc 662), cela signifie qu'aucun accessoire n'est à proximité de l'appareil 1. Tout identifiant, qui avait été enregistré, est alors effacé de la mémoire de l'appareil (bloc 680, « All known UID clear ») . Le cas échéant, une information est envoyée au circuit hôte 105' (HOST) pour une potentielle notification à l'utilisateur de l'appareil que l'accessoire n'est plus détecté.

Les seuils pris en compte par les boucles d'interrogation LPTD sont de nouveau calibrés (bloc 670) pour prendre en compte l'absence d'accessoire et l'appareil repasse en mode veille avec trames d'interrogation périodiques (blocs 600 et 602).

Dans le mode de réalisation des figures 4 à 6A, le circuit d'adaptation d'impédance 120' de l'antenne 125 peut, comme dans le premier aspect être réglable entre deux valeurs selon qu'un accessoire est ou non présent. En variante, l'adaptation correspondante est effectuée pendant les phases de calibration. On peut prévoir la même chose côté circuit 130' bien que cela soit moins utile dans la mesure où lorsque l'on a besoin de communiquer avec cette antenne, c'est qu'un accessoire est présent.

Comme pour les modes de réalisation décrits en relation avec le premier aspect (figures 1 à 3A), dans les modes de réalisation décrits ci-dessus en relation avec le deuxième aspect (figures 4 à 6A), on prévoit que l'accessoire puisse être placé en mode muet ou que ses communications NFC soient en type V.

Un avantage des modes de réalisation décrits est qu'ils évitent le recours à un magnétomètre.

Un autre avantage des modes de réalisation décrits utilisant le type V pour les communications NFC accessoire-téléphone est qu'ils sont compatibles avec tout accessoire sans qu'il ait besoin d'un jeu de commandes particulier.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, chaque boucle d'antenne peut contenir un ou plusieurs tours. De plus, bien que cela n'ait pas été précisé, les antennes des applications visées par la présente description sont formées d'enroulements plans.

Enfin, la mise en oeuvre pratique des modes de réalisation et variantes décrits est à la portée de la personne du métier à partir des indications fonctionnelles données ci-dessus. En particulier, pour ce qui est du dimensionnement des antennes ou des boucles d'antenne.

D'autres exemples de modes de réalisation de la présente description sont explicités par la suite.

Exemple 1 : un appareil mobile comportant un routeur de communication en champ proche (110') et deux antennes (125, 127) reliées au routeur via un sélecteur (140'), dans lequel :
une première antenne (125) est dédiée à un premier mode de fonctionnement avec un premier type de dispositifs NFC (3),
une deuxième antenne (127) est dédiée à un deuxième mode fonctionnement avec un deuxième type de dispositif NFC (2),
la sélection de l'une ou l'autre antenne étant effectuée suite à une détection opérée pendant des trames d'interrogation (600) émises par l'une ou l'autre des antennes.

Exemple 2 : un procédé de communication en champ proche d'un appareil mobile comportant un routeur de communication en champ proche (110') et deux antennes (125, 127) reliées au routeur via un sélecteur (140'), dans lequel :
une première antenne (125) est dédiée à un premier mode de fonctionnement avec un premier type de dispositifs NFC (3),
une deuxième antenne (127) est dédiée à un deuxième mode fonctionnement avec un deuxième type de dispositif NFC (2),
la sélection de l'une ou l'autre antenne étant effectuée suite à une détection opérée pendant des trames d'interrogation (600) émises par l'une ou l'autre des antennes

Exemple 3 : appareil selon l'exemple 1, ou procédé selon l'exemple 2, dans lequel le deuxième type de dispositif correspond à un accessoire (2) de l'appareil (1).

Exemple 4 : appareil selon l'exemple 1 ou 3, ou procédé selon l'exemple 2 ou 3, dans lequel la communication avec le premier type de dispositif (3) s'effectue en mode lecteur ou carte avec la première antenne (125).

Exemple 5 : appareil selon l'un quelconque des exemples 1, 3 et 4, ou procédé selon l'un quelconque des exemples 2 à 4, dans lequel une identification d'un dispositif du deuxième type est effectuée avec l'appareil en mode lecteur communiquant avec la deuxième antenne (127).

Exemple 6 : appareil ou procédé selon l'exemple 5, dans lequel une identification (650) d'un dispositif du deuxième type (2) est effectuée par un microcontrôleur (105') de l'appareil, distinct du routeur (110'), le microcontrôleur mémorise alors un identifiant unique (650) du dispositif du deuxième type.

Exemple 7 : appareil ou procédé selon l'exemple 6, dans lequel si aucun dispositif n'est détecté par aucune des deux antennes pendant une trame d'interrogation, le microcontrôleur efface tout identifiant unique (680) d'un dispositif du deuxième type présent en mémoire.

Exemple 8 : appareil ou procédé selon l'un quelconque des exemples 5 à 7, dans lequel, suite à une identification (650) d'un dispositif NFC du deuxième type par la deuxième antenne (127), des seuils d'un détecteur faible consommation sont recalibrés (670).

Exemple 9 : appareil selon l'un quelconque des exemples 1, 3 à 8, ou procédé selon l'un quelconque des exemples 2 à 8, dans lequel, si un dispositif NFC du deuxième type précédemment identifié (650) n'est plus détecté par aucune des deux antennes pendant une trame d'interrogation, des seuils d'un détecteur faible consommation sont recalibrés (670) .

Exemple 10 : appareil selon l'un quelconque des exemples 1, 3 à 9, ou procédé selon l'un quelconque des exemples 2 à 9, dans lequel si un dispositif du deuxième type dont l'identifiant n'a pas été mémorisé par le microcontrôleur est identifié (650) par la première antenne (125), les antennes sont commutées (648) pour que la détection s'effectue sur la deuxième antenne (127).

Exemple 11 : appareil ou procédé selon l'exemple 10, dans lequel l'antenne (127) destinée aux dispositifs du deuxième type entoure ou est entourée d'un aimant (16) d'alignement des antennes respectives de l'appareil et du dispositif du deuxième type.

Exemple 12 : appareil selon l'un quelconque des exemples 1, 3 à 11, ou procédé selon l'un quelconque des exemples 2 à 11, dans lequel les dispositifs du deuxième type sont de type V.

## Revendications

1. Appareil mobile comportant un routeur de communication en champ proche (110) et une antenne (12), reliée au routeur par l'intermédiaire d'au moins un circuit d'adaptation d'impédance entre au moins deux valeurs d'impédance (120 et 130), dans lequel :
une première valeur d'impédance est sélectionnée pour communiquer avec un dispositif de communication en champ proche d'un premier type (3) en présence d'un dispositif de communication en champ proche d'un deuxième type (2),
une deuxième valeur d'impédance est sélectionnée pour communiquer avec un dispositif de communication en champ proche du premier type en l'absence d'un dispositif de communication en champ proche du deuxième type,
la présence ou l'absence d'un dispositif de communication en champ proche du deuxième type étant déterminée à partir de trames d'interrogation (370) émises par l'antenne.

2. Procédé de communication en champ proche d'un appareil mobile comportant un routeur de communication en champ proche (110) et une antenne (12), reliée au routeur par l'intermédiaire d'un moins un circuit d'adaptation d'impédance entre au moins deux valeurs d'impédance (120 et 130), dans lequel :
une première valeur d'impédance est sélectionnée pour communiquer avec un dispositif de communication en champ proche d'un premier type (3) en présence d'un dispositif de communication en champ proche d'un deuxième type (2),
une deuxième valeur d'impédance est sélectionnée pour communiquer avec un dispositif de communication en champ proche du premier type en l'absence d'un dispositif de communication en champ proche du deuxième type,
la présence ou l'absence d'un dispositif de communication en champ proche du deuxième type étant déterminée à partir de trames d'interrogation (370) émises par l'antenne.

3. Appareil selon la revendication 1, ou procédé selon la revendication 2, dans lequel le deuxième type de dispositif correspond à un accessoire (2) de l'appareil (1).

4. Appareil selon la revendication 1 ou 3, ou procédé selon la revendication 2 ou 3, dans lequel la communication avec le premier type de dispositif (3) s'effectue en mode lecteur ou carte.

5. Appareil selon l'une quelconque des revendications 1, 3 et 4, ou procédé selon l'une quelconque des revendications 2 à 4, dans lequel une identification d'un dispositif du deuxième type est effectuée avec l'appareil en mode lecteur.

6. Appareil ou procédé selon la revendication 5, dans lequel l'identification d'un dispositif du deuxième type (2) est effectuée par un microcontrôleur (105) de l'appareil, distinct du routeur (110), le microcontrôleur mémorisant (358) un identifiant unique du dispositif du deuxième type.

7. Appareil ou procédé selon la revendication 6, dans lequel si aucun dispositif du premier ou deuxième type n'est détecté pendant une trame d'interrogation (310), le microcontrôleur efface (390) tout identifiant unique d'un dispositif du deuxième type présent en mémoire.

8. Appareil ou procédé selon l'une quelconque des revendications 5 à 7, dans lequel, suite à une identification d'un dispositif NFC du deuxième type, des seuils d'un détecteur en mode veille sont recalibrés (360) .

9. Appareil selon l'une quelconque des revendications 1, 3 à 8, ou procédé selon l'une quelconque des revendications 2 à 8, dans lequel, si un dispositif NFC du deuxième type précédemment identifié n'est plus détecté (sortie N du bloc 310), des seuils d'un détecteur en mode veille sont recalibrés (360).

10. Appareil selon l'une quelconque des revendications 1, 3 à 9, ou procédé selon l'une quelconque des revendications 2 à 9, dans lequel l'antenne (12) comporte deux boucles électriquement en série (121 et 123), respectivement destinées à des dispositifs du premier (3) et du deuxième type (2).

11. Appareil ou procédé selon la revendication 10, dans lequel la boucle (123) destinée aux dispositifs du deuxième type (2) entoure ou est entourée d'un aimant (16) d'alignement des antennes respective de l'appareil et du dispositif du deuxième type.

12. Appareil selon l'une quelconque des revendications 1, 3 à 11, ou procédé selon l'une quelconque des revendications 2 à 11, dans lequel les communications NFC entre l'appareil et dispositifs du deuxième type (2) sont de type V.

13. Système comprenant :
- l'appareil mobile selon la revendication 1 ou selon l'une quelconque des revendications 3 à 12 ;
- le dispositif de communication en champ proche du premier type ; et
- le dispositif de communication en champ proche du deuxième type.
